# EUROPÄISCHE PATENTSCHRIFT

(11) **EP 0 577 971 B1**
(45) Veröffentlichungstag und Bekanntmachung des Hinweises auf die Patenterteilung: **20.03.1996**
(21) Anmeldenummer: 93108895.9
(22) Anmeldetag: 03.06.1993
(51) Int. Cl.: B29C 45/84

(54) **Verfahren zum Betrieb einer Spritzgiessmaschine mit Werkzeugsicherung**
Method for operating an injection moulding machine with mould protection
Procédé pour l'opération d'une machine à mouler par injection avec protection de moule

(30) Priorität: 16.06.1992 DE 4219687
(43) Veröffentlichungstag der Anmeldung: 12.01.1994
(73) Patentinhaber: HERBST, Richard, D-85386 Eching (DE)
(72) Erfinder: HERBST, Richard, D-85386 Eching (DE)
(74) Vertreter: Witte, Alexander, Dr.-Ing.

(56) Entgegenhaltungen:
- DE-A- 3 032 407
- PATENT ABSTRACTS OF JAPAN vol. 17, no. 111 (M-1376)8. März 1993 & JP-A-04 298 317 (FANUC)
- PATENT ABSTRACTS OF JAPAN vol. 13, no. 94 (M-804)(3442) 6. März 1989 & JP-A-63 286 315 (FANUC)
- PATENT ABSTRACTS OF JAPAN vol. 9, no. 194 (M-403)(1917) 10. August 1985 & JP-A-60 058 826 (SUMITOMO JUKIKAI KOGYO)

## Beschreibung

Die Erfindung betrifft ein Verfahren zum Betrieb einer Spritzgießmaschine mit Werkzeugsicherung, wobei zur Werkzeugsicherung das bewegte Werkzeug der Spritzgießmaschne während einer Endphase des Schließhubes mit reduzierter Bewegungsgeschwindigkeit und/oder reduziertem Druck angetrieben wird, das Erreichen einer vorgegebenen Endposition (S₂) des Werkzeuges detektiert und ein Störsignal erzeugt wird, wenn die vorgegebene Position nicht erreicht oder nicht in einem vorgegebenen Zeitintervall erreicht wird, wobei bei Vorliegen des Störsignals die Beaufschlagung des Werkzeugs mit dem Schließdruck gesperrt wird.

Aus der DE-OS 30 32 407 ist eine Vorrichtung zur Regelung der Schließgeschwindigkeit der verschiebbaren Formaufspannplatte einer Spritzgießmaschine bekannt. Bei der bekannten Vorrichtung wird die Schließgeschwindigkeit der verschiebbaren Formaufspannplatte als erstes Meßsignal mit einer dem Plattenabstand zugeordneten Referenzspannung als zweites Meßsignal in einer Vergleichseinrichtung verglichen. Bei Erreichen eines bestimmten von Null verschiedenen Differenzwertes wird ein Korrektursignal für einen Regelkreis erzeugt, um die Schließgeschwindigkeit der verschiebbaren Formaufspannplatte für einen restlichen kurzen Schließweg zu reduzieren. Hierzu wird beispielsweise der Betätigungsdruck für die Formaufspannplatte entsprechend vermindert.

Aus der DE-OS 36 31 164 sind ein Verfahren und eine Einrichtung zum Messen und Regeln der Schließkraft einer Kunststoff-Spritzgießmaschine bekannt. Dabei wird während einer vorbestimmten Anzahl von Arbeitszyklen der Spritzgießmaschine die Schließkraft bei verriegelter Form gemessen. Aus diesen Messungen wird ein mittlerer Wert berechnet. Liegt dieser mittlere Wert innerhalb einer vorbestimmten Toleranzzone, erfolgt kein Regeleingriff. Liegt der mittlere Wert jedoch außerhalb der Toleranzzone in einer durch Alarmgrenzen begrenzten Regelzone, erfolgt ein Regeleingriff durch schrittweises Ändern der Einbauhöhe der Form und damit der Schließkraft für den nachfolgenden Arbeitszyklus. Das bekannte Verfahren kann während der Anfahrphase der Spritzgießmaschine oder (nach Erreichen des thermischen Gleichgewichtes) auch in der normalen Betriebsphase eingesetzt werden.

Aus der JP-A-60 58826 ist eine Vorrichtung zum Ändern der Spritzbedingungen einer Spritzgießmaschine bekannt. Bei dieser bekannten Spritzgießmaschine sind in einem Speicher der Maschine unterschiedliche Parametersätze für verschiedene Betriebsbedingungen der Maschine abgelegt. Weiterhin ist die Maschine mit einem Zähler ausgestattet, der die Anzahl der Spritzzyklen zählt. Bei der Inbetriebnahme der Maschine wird ein bestimmter Zahlenwert festgelegt, der der Anzahl der Spritzzyklen entspricht, nach denen die Anfahrphase der Maschine abgeschlossen ist. Bei Inbetriebnahme der Maschine wird nun zunächst mit einem ersten Satz von Betriebsparametern gearbeitet und es wird gleichzeitig das Sensorsignal überwacht und mit der vorgegebenen Zahl verglichen. Sobald das Sensorsignal, d.h. die Anzahl der gemessenen Spritzzyklen, mit der vorgegebenen Zahl übereinstimmt, schaltet die Maschine auf einen anderen Satz von Betriebsparametern um, um dem nun eingetretenen thermischen Gleichgewicht, der verringerten Viskosität des Kunststoffmaterials und dgl. Rechnung zu tragen.

Bei Spritzgießmaschinen wird im allgemeinen das bewegliche Werkzeug durch einen hydraulischen Schließantrieb zunächst mit vorgegebenen Druck und Geschwindigkeit gegen das feststehende Werkzeug bis zum Erreichen der Schließposition heranbewegt und dann in der Schließposition durch einen hydraulischen Andruckzylinder mit einer hohen Schließkraft beaufschlagt, damit die Form auch unter dem hohen Druck des injizierten Kunststoffmaterials geschlossen bleibt. Die Schließkraft wird häufig getrennt von dem Schließantrieb durch einen hydraulischen Andruckzylinder erzeugt, es kann aber auch ein einziger Hydraulikzylinder vorgesehen sein, der z.B. über eine Kniehebelmechanik mit progressiv zunehmender Kraft das bewegliche Werkzeug antreibt, so wie dies z.B. bei der Spritzgießmaschine gemäß der o.g. DE-OS 36 31 164 der Fall ist.

Wenn sich bei der Schließbewegung ein Hindernis zwischen den Formwerkzeugen befindet, z.B. ein Fremdkörper oder erkaltete Kunststoffreste, dann können sich diese zwischen den Formwerkzeugen verklemmen. Wird dann die Form mit dem Schließdruck beaufschlagt, so können die Formwerkzeuge beschädigt werden oder es kann, wenn die Form nur unvollständig geschlossen wird, Kunststoffschmelze beim anschließenden Spritzvorgang austreten.

Um dieser Gefahr zu begegnen, ist es weiterhin bekannt, ein als "Werkzeugsicherung" bezeichnetes Verfahren anzuwenden, durch das Störungen der Schließbewegung detektiert werden können. Zu diesem Zweck wird in einer Endphase des Schließhubes die Bewegungsgeschwindigkeit des bewegten Werkzeuges und/oder der Druck, mit dem der Schließantrieb beaufschlagt wird, sehr stark herabgesetzt, wie dies an sich aus der eingangs genannten DE-OS 30 32 407 bekannt ist.

Befindet sich im Weg des Werkzeuges ein Hindernis, so wird das Werkzeug aufgrund des verminderten Drucks bzw. der verminderten Geschwindigkeit durch das Hindernis aufgehalten oder zumindest verzögert. Wenn eine "Werkzeugsicherung" in diesem Falle vorhanden ist, so wird detektiert, ob das Werkzeug eine vorgegebene Endposition erreicht oder nicht. Wird die Endposition überhaupt nicht oder nicht in einem vorgegebenen Zeitintervall erreicht, so wird ein Störsignal ausgelöst, das die Beaufschlagung des Werkzeuges mit der Schließkraft verhindert.

Bei modernen Spritzgießmaschinen werden hohe Taktgeschwindigkeiten angestrebt. Für den gesamten Schließhub steht nur ein kurzer Zeitraum, in der Größenordnung von 0,5 Sekunden, zur Verfügung. Innerhalb dieses Zeitraumes kann für die Phase der Werkzeugsicherung, in der die Werkzeuggeschwindigkeit reduziert wird, nur eine sehr kurze Zeitspanne reserviert werden, da andernfalls sich die gesamte Dauer des Schließhubes in unerwünschter Weise verlängern würde. Innerhalb eines kurzen Zeitintervalles von z.B. nur 1/10 Sekunden oder weniger kann aber die Werkzeugsicherung nur mit einer relativ groben und unempfindlichen Einstellung betrieben werden. Dabei können aufgrund der Trägheitskräfte Beschädigungen des Werkzeuges selbst bei ansprechender Werkzeugsicherung nicht mit Sicherheit vermieden werden. Wird die Werkzeugsicherung nicht mit reduzierter Geschwindigkeit, sondern mit reduziertem Druck betrieben, so entfällt zwar weitgehend der Zeitverlust, jedoch ist die Empfindlichkeit gering und die Gefahr der Beschädigung der Werkzeuge entsprechend groß.

Bei der bekannten Vorrichtung gemäß der eingangs genannten DE-OS 30 32 407 wird lediglich die Schließgeschwindigkeit des Werkzeuges geregelt und gegen Ende des Schließhubes abgebremst.

Bei der bekannten Vorrichtung gemäß DE-OS 36 31 164 wird zwar durch Überwachung der Schließkraft ein Störfall detektiert, ferner wird diese Überwachung über einen bestimmten Zeitraum, nämlich durch Mittelwertbildung erstreckt, systematische Folgerungen werden daraus jedoch nicht abgeleitet, insbesondere dann nicht, wenn während des Zeitintervalls durch die Mittelwertbildung keine Störung detektiert wurde.

Bei der bekannten Vorrichtung gemäß JP-A-60-58826 wird unabhängig vom Vorhandensein oder Nicht-Vorhandensein eines Störfalls nach einer bestimmten Anzahl von Spritzzyklen von einer ersten Betriebsart der Spritzgießmaschine auf eine zweite Betriebsart mit anderen Betriebsparametern umgeschaltet.

Aus diesen Gründen wird bei den bekannten Vorrichtungen weder überhaupt keine Fehlererkennung vorgenommen oder die Fehlererkennung wird in regelmäßigen Abständen wiederholt, was zu entsprechenden Zeitverlusten führt.

Der Erfindung liegt demgegenüber die Aufgabe zugrunde, ein Verfahren der eingangs genannten Art dahingehend weiterzubilden, daß eine sensibler einstellbare und zuverlässig ansprechende Werkzeugsicherung durchgeführt werden kann, wobei die Produktionsgeschwindigkeit der Maschine nicht wesentlich beeinträchtigt wird oder sogar, verglichen mit dem Stand der Technik, gesteigert werden kann.

Diese Aufgabe wird erfindungsgemäß dadurch gelöst, daß die Maschine beim Anfahren während einer vorgegebenen Anzahl N von Spritzzyklen mit einer Geschwindigkeit betrieben wird, die ein Bruchteil der vollen Betriebsgeschwindigkeit der Maschine ist, und während jedes dieser N Zyklen die Werkzeugsicherung während jeder Schließbewegung durchgeführt wird, und daß die Maschinengeschwindigkeit nur dann auf die Betriebsgeschwindigkeit erhöht wird, wenn innerhalb der N Zyklen das Störsignal nicht auftritt.

Die Erfindung beruht somit auf dem Prinzip, bei jedem Anfahren der Maschine die ersten N Spritzgießzyklen lediglich zum Zwecke der Werkzeugsicherung mit stark reduzierter Geschwindigkeit durchzuführen. Diese beträgt z.B. nur 10 oder 20 % der endgültigen Betriebsgeschwindigkeit der Maschine. Während dieser Zeit können Störungen in der Schließbewegung der Werkzeuge sehr feinfühlig detektiert werden.

Die Erfahrung zeigt, daß der weitaus überwiegende Teil aller Störungen beim Anfahren der Maschine auftritt. Wenn während der ersten N Spritzzyklen, die erfindungsgemäß mit reduzierter Geschwindigkeit durchgeführt werden, die Werkzeugsicherung kein Störsignal auslöst, kann mit hoher Wahrscheinlichkeit davon ausgegangen werden, daß auch weiterhin keine Störung auftritt.

Die Werkzeugsicherung kann deshalb nach den ersten N Zyklen ausgeschaltet werden, oder sie kann während der gesamten anschließenden, mit normaler Betriebsgeschwindigkeit durchgeführten Arbeitszeit im Betrieb bleiben. Dann hat sie allerdings entsprechend der vollen Taktgeschwindigkeit nicht mehr die gleiche Empfindlichkeit wie während der ersten N Zyklen.

Die Maschine kann eine Automatik aufweisen, die bei jedem Anfahren das Durchlaufen der ersten N Zyklen mit reduzierter Geschwindigkeit dann, bei Fehlen eines Störsignals, das Steigern der Geschwindigkeit sprunghaft oder mit einer vorgegebenen Steigerungsrate bis auf die volle Betriebsgeschwindigkeit steuert.

Die Erfindung wird anhand der Zeichnungen näher erläutert.
Fig. 1 zeigt schematisch das Werkzeug einer Spritzgießmaschine in der Öffnungs- und Schließstellung;
Fig. 2 und 3 zeigen ein vereinfachtes Zeitdiagramm der Werkzeugsicherung bei zwei verschiedenen Maschinengeschwindigkeiten.

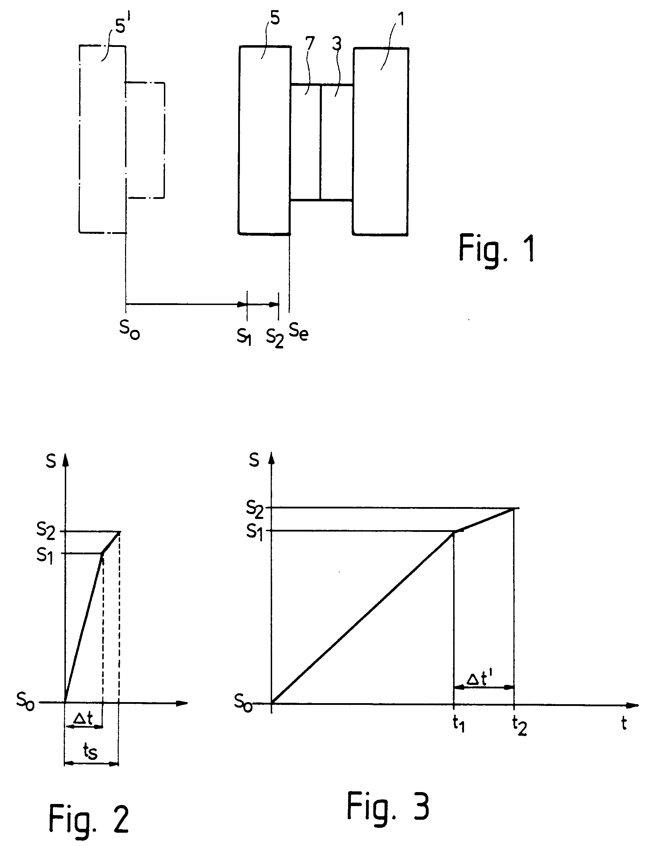

Fig. 1 zeigt schematisch die feststehende Werkzeugaufspannplatte 1 mit dem feststehenden Werkzeugteil 3 sowie die bewegliche Werkzeugaufspannplatte 5 mit dem beweglichen Werkzeugteil 7 einer Spritzgießmaschine. Die bewegliche Werkzeugaufspannplatte 5 mit dem Werkzeugteil 7 kann durch einen (nicht dargestellten) Öffnungs- und Schließantrieb, in der Regel ein hydraulischer Antrieb, zwischen der strichpunktiert gezeigten Öffnungsstellung 5' und der Schließstellung 5 bewegt werden. In der Schließstellung 5 kann sie durch einen (nicht dargestellten) hydraulischen Schließzylinder mit einer Schließkraft beaufschlagt werden. Die Erfindung ist aber auch bei anderen Antriebsmechanismen, z.B. mit Kniehebelmechanik, anwendbar.

Die Schließbewegung der Werkzeugaufspannplatte 5 verläuft von der Öffnungsposition S₀ über den größten Teil des Schließhubes bis zu einer Zwischenposition S₁ mit voller Geschwindigkeit des Schließantriebes. In der Endphase des Schließhubes, d.h. nach Durchlaufen der Zwischenposition S₁, wird die Schließgeschwindigkeit reduziert. Es wird detektiert, ob bzw. wann eine vorgegebene Endposition S₂ erreicht wird, wobei diese Endposition mit der völligen Schließposition Sₑ übereinstimmen kann, vorzugsweise aber geringfügig vor der Schließposition Sₑ liegt. Wird die Endposition S₂ überhaupt nicht oder nicht innerhalb eines vorgegebenen Zeitintervalls erreicht, so ist dies ein Anzeichen dafür, daß der Schließvorgang gestört ist, z.B. durch einen im Formwerkzeug befindlichen Fremdkörper. Es wird dann der Schließantrieb für die Werkzeugaufspannplatte 5 abgeschaltet und insbesondere das Beaufschlagen mit der Schließkraft verhindert. Auf diese Weise werden Beschädigungen der teuren Formwerkzeuge verhindert.

Fig. 2 zeigt, daß bei der vollen Betriebsgeschwindigkeit der Maschine, wenn für den gesamten Schließhub nur die Zeit tₛ zur Verfügung steht, das Zeitintervall Δt, in dem die Werkzeugsicherung wirksam ist, äußerst kurz ist, so daß ein hinreichend empfindliches und exaktes Ansprechen der Werkzeugsicherung nicht gewährleistet ist.

Wird jedoch gemäß Fig. 3 die Maschine beim Anfahren während der ersten N Zyklen, z.B. während 5 Zyklen, mit einer verringerten Geschwindigkeit betrieben, die z.B. nur 20 % der vollen Betriebsgeschwindigkeit gemäß Fig. 2 beträgt, dann steht für den gesamten Schließhub eine entsprechend längere Zeit zur Verfügung, und auch das Zeitintervall Δt' für die Werkzeugsicherung ist entsprechend größer. Die Werkzeugaufspannplatte 5 bewegt sich im Zeitintervall Δt' relativ langsam, und es kann deshalb sehr präzise und feinfühlig festgestellt werden, ob die Wegstrecke zwischen den Positionen S₁ und S₂ in einem vorgegebenen Zeitintervall Δt' zurückgelegt wird oder nicht. Befindet sich zwischen den Werkzeugen 3,7 ein Fremdkörper, so wird das bewegte Werkzeug angehalten oder verzögert, was zum Auslösen des Störsignals führt.

## Patentansprüche

1. Verfahren zum Betrieb einer Spritzgießmaschine mit Werkzeugsicherung, wobei zur Werkzeugsicherung das bewegte Werkzeug (5,7) der Spritzgießmaschine während einer Endphase des Schließhubes mit reduzierter Bewegungsgeschwindigkeit und/oder reduziertem Druck angetrieben wird, das Erreichen einer vorgegebenen Endposition (S₂) des Werkzeugs detektiert und ein Störsignal erzeugt wird, wenn die vorgegebene Position nicht erreicht oder nicht in einem vorgegebenen Zeitintervall erreicht wird, wobei bei Vorliegen des Störsignals die Beaufschlagüng des Werkzeugs mit dem Schließdruck gesperrt wird, dadurch **gekennzeichnet,** daß die Maschine beim Anfahren während einer vorgegebenen Anzahl N von Spritzzyklen mit einer Geschwindigkeit betrieben wird, die ein Bruchteil der vollen Betriebsgeschwindigkeit der Maschine ist, und während jedes dieser N Zyklen die Werkzeugsicherung während jeder Schließbewegung durchgeführt wird, und daß die Maschinengeschwindigkeit nur dann auf die Betriebsgeschwindigkeit erhöht wird, wenn innerhalb der N Zyklen das Störsignal nicht auftritt.

2. Verfahren nach Anspruch 1, dadurch **gekennzeichnet,** daß bei jeder Schließbewegüng die Bewegungsgeschwindigkeit und/oder der Antriebsdruck des Werkzeugs reduziert wird, sobald das Werkzeug eine vorgegebene Zwischenposition (S₁) erreicht hat, und daß das Störsignal dann erzeugt wird, wenn das Werkzeug die vorgegebene Endposition (S₂) nicht innerhalb eines vorgegebenen Zeitintervalls (Δt') nach Durchlaufen der Zwischenposition (S₂) erreicht, und daß das Zeitintervall (Δt') an die während der ersten N Zyklen reduzierte Maschinengeschwindigkeit angepaßt ist.

3. Verfahren nach Anspruch 1 und 2, dadurch **gekennzeichnet,** daß die vorgegebene Endposition (S₂) geringfügig vor der endgültigen Schließlage (Sₑ) des Werkzeuges liegt.

4. Verfahren nach einem der Ansprüche 1 bis 3, dadurch **gekennzeichnet,** daß die Werkzeugsicherung nur innerhalb der ersten N Zyklen betrieben und dann ausgeschaltet wird.

5. Verfahren nach einem der Ansprüche 1 bis 3, dadurch **gekennzeichnet,** daß die Werkzeugsicherung auch nach den ersten N Zyklen weiter in Betrieb bleibt, wobei die Dauer des überwachten Zeitintervalls (Δt) entsprechend der Erhöhung der Maschinengeschwindigkeit verkürzt wird.

6. Verfahren nach einem der Ansprüche 1 bis 5, dadurch **gekennzeichnet,** daß nach den N Zyklen die Maschinengeschwindigkeit mit einer vorgegebenen Steigerungsrate kontinuierlich auf die Betriebsgeschwindigkeit gesteigert wird.

## Claims

1. A method of operating an injection-moulding machine having mould-protecting means, wherein for protecting the mould, the movable mould part (5, 7) of the injection-moulding machine is driven at a reduced speed and/or reduced pressure during the final phase of the closing travel, the arrival of the mould at a predetermined final position (S₂) being detected, and a trouble signal being generated when the predetermined position is not reached, or not reached within a predetermined period of time, and wherein upon occurrence of the trouble signal the exertion of closing pressure to the mould is suppressed, characterized in that during the start-up phase the machine is operated at a speed corresponding to a fraction of the full operating speed of the machine for a predetermined number (N) of injection cycles, that during each of these N cycles the mould-protecting process is carried out for each closing movement, and that the machine speed is increased to operating speed only if the trouble signal does not occur during the N cycles.

2. The method of claim 1, characterized in that during each closing movement the speed of movement and/or the mould drive pressure is reduced as soon as the mould has reached a predetermined intermediate position (S₁), and that the trouble signal is generated if the mould has not reached the predetermined final position (S₂) within a predetermined period of time (Δt') after the mould has passed the intermediate position (S₂), and that the period of time (Δt') is adapted to the reduced machine speed prevailing during the first N cycles.

3. The method of claims 1 and 2, characterized in that the predetermined final position (S₂) is located slightly before the final closing position (Sₑ) of the mould.

4. The method of any of claims 1 to 3, characterized in that the mould-protecting means is operated only during the first N cycles and is then switched off.

5. The method of any of claims 1 to 3, characterized in that the mould-protecting means remains active even after the first N cycles, wherein the duration of the monitored period of time (Δt) is reduced in correspondence with the increase of machine speed.

6. The method of any of claims 1 to 5, characterized in that at the end of the N cycles the machine speed is continuously increased to operating speed at a predetermined rate of acceleration.

## Revendications

1. Procédé pour la mise en oeuvre d'une machine à mouler par injection avec protection de moule, dans lequel, pour assurer la protection du moule, l'outil mobile (5, 7) de la machine à mouler par injection est entraîné à une vitesse de déplacement réduite et/ou sous une pression réduite, lors de la phase finale de la course de fermeture, l'arrivée du moule à une position finale donnée (S₂) est détectée et un signal de défaut est émis si la position donnée n'est pas atteinte, ou bien si elle n'est pas atteinte dans un délai donné, l'apparition d'un signal de défaut ayant pour effet d'inhiber l'application de la pression de fermeture sur le moule, caractérisé en ce que, lors du démarrage, la machine fonctionne pendant un nombre N déterminé de cycles d'injection à une vitesse qui est une fraction de la vitesse de fonctionnement nominale de la machine, la protection de moule étant active pendant chaque mouvement de fermeture de chacun de ces N cycles et en ce que la vitesse de la machine ne passe alors à la vitesse de fonctionnement nominale que si le signal de défaut n'a pas été émis au cours de ces N cycles.

2. Procédé selon la revendication 1, caractérisé en ce qu'à chaque mouvement de fermeture, la vitesse de déplacement et/ou la pression d'entraînement de l'outil sont réduites, dès que l'outil a atteint une position intermédiaire (S₁) définie au préalable et en ce que le signal de défaut est émis si l'outil n'a pas atteint la position finale (S₂) définie au préalable dans un délai (Δt') donné, après avoir franchi la position intermédiaire (S₂), et en ce que l'intervalle de temps (Δt') est fonction de la réduction de vitesse de la machine pendant les N premiers cycles.

3. Procédé selon l'une ou l'autre des revendications 1 et 2, caractérisé en ce que la position finale (S₂) définie au préalable est située légèrement avant la position finale (Sₑ) de fermeture du moule.

4. Procédé selon l'une quelconque des revendications 1 à 3, caractérisé en ce que la protection de moule n'est active que pendant les N premiers cycles, puis est désactivée.

5. Procédé selon l'une quelconque des revendications 1 à 3, caractérisé en ce que la protection de moule reste également active après les N premiers cycles, l'intervalle de temps de surveillance (Δt) se trouvant toutefois réduit en proportion de l'augmentation de la vitesse de la machine.

6. Procédé selon l'une quelconque des revendications 1 à 5, caractérisé en ce qu'après les N cycles, la vitesse de la machine est augmentée d'une façon continue, selon un taux d'accroissement déterminé, jusqu'à la vitesse de fonctionnement nominale.
